# EUROPEAN PATENT APPLICATION

(11) **EP 2 407 880 A1**
(43) Date of publication of application: **18.01.2012**
(21) Application number: 10305773.3
(22) Date of filing: 12.07.2010
(51) Int. Cl.: G06F 9/46, G06F 13/10, G06F 3/12

(54) **Method for managing a communication between a host machine and a peripheral device in a cloud environment**

(71) Applicant: Gemalto SA, 92190 Meudon (FR)
(72) Inventor: Negrea, Alex, 13705 La Ciotat Cedex (FR); Couvert, Aurélien, 83000, Toulon (FR); Delsuc, Julien, 13013, Marseille (FR)

(57) **Abstract**

The invention relates to a method for managing a communication between a host machine and a peripheral device. The method comprises the steps of:
- sending a first data to a server from the host machine through a network, the server comprising a generator means corresponding to the peripheral device,
- generating a second data by using the first data and the generator means,
- sending the second data to a portable secure device through the network, the portable device being connected to the peripheral device,
- sending the second data in a raw format from the portable secure device to the peripheral device.

## Description

### (Field of the invention)

The present invention relates to method for managing a communication between a host machine and a peripheral device in cloud environment. The invention relates more particularly to a way for accessing peripheral devices whose driver is not available in the host machine.

### (State of the art)

Many computer peripheral devices, like webcams or printers, require specific drivers to be installed in the host machine which is intended to access and use these peripheral devices. These peripheral devices may have contact or wireless communication interfaces. For example the peripheral devices may have a USB port or a Wi-Fi interface.

The Cloud computing is a systems architecture model for Internet-based computing. The cloud is a framework which allows hiding the complex infrastructure of the internet. The cloud allows users to access technology-enabled services from the Internet, without knowledge of the technologies behind the servers providing services. Cloud computing is an architecture which utilizes software as a service, such as Web 2.0 and other technology trends. For example, a business application may be provided online. This application may be accessed from a web browser, while the corresponding software and data are stored on the Internet servers (instead of being stored on the hard drive of the user's machine).

In general, a cloud computing infrastructure consists of reliable services delivered through data centers that are built on computer and storage virtualization technologies. These services are accessible anywhere in the world, with the cloud which appears as a single point of access for all the computing needs of consumers.

A cloud operating system is a simplified operating system based on a web browser that provides access to a variety of web-based applications that allow the user to perform many simple tasks without booting a full-scale operating system. The cloud operating systems are designed for machines like netbooks, mobile Internet devices, and for PCs that are mainly used to browse the Internet. In particular, when a cloud operating system is installed as a standalone operating system, the corresponding hardware requirements for the host machine are rather low.

Some of cloud operating system does not allow installing additional driver on the host machine. This is the case of Google Chrome OS ®. There is a need to provide access to peripheral devices whose drivers are not available on the host machine which has to use the peripheral devices.

### (Summary of the Invention)

An object of the invention is to solve the above mentioned technical problem.

The object of the present invention is a method for managing a communication between a host machine and a peripheral device. The method comprises the steps of:
- identifying a first data in the host machine,
- sending said first data to a server through a network, the server comprising a generator means which corresponds to the peripheral device,
- generating a second data by using the first data and the generator means,
- sending the second data to a portable secure device through the network, the portable secure device being connected to the peripheral device,
- sending the second data in a raw format from the portable secure device to the peripheral device.

In on embodiment, the host machine may run a cloud operating system.

Advantageously, a user may have logged in the host machine. The user may have an account in the server. The peripheral device may have a first identifier and the portable secure device may have a second identifier. The method may comprise the step of registering, in the server, a link between the user and the peripheral device by associating the account with the first identifier or with the second identifier.

In on embodiment, the second data may be sent from the server to the portable secure device through a secure mode.

Advantageously, the method may comprise the step of establishing a secure session between the host machine and the server.

In on embodiment, the peripheral device may belong to a device class and the first data may be sent from the host machine to the server through a cloud service which is dedicated to said class.

Advantageously, the peripheral device may be a USB device and the portable secure device may comprise a port of USB host type.

In on embodiment, the peripheral device may have a wireless interface and the portable secure device may comprise a wireless port.

Advantageously, the method may comprise the further steps of:
- identifying a third data in the peripheral device,
- sending this third data in a raw format to the portable secure device,
- sending the third data to the server,
- generating a fourth data by using this third data and the generator means, and
- sending the fourth data from the server to the host machine.

The network may be either a public network or a private network.

Another object of the invention is system comprising a portable secure device and a server. The system allows a communication between a peripheral device and a host machine. The portable secure device comprises a first interface capable of communicating with the peripheral device. The portable secure device comprises a second communication interface which is capable of communicating with the server. The server is able to receive a first data from the host machine through a network. The server comprises a generator means corresponding to the peripheral device. The server comprises a generator means which is able to generate a second data by using the first data, the second data being generated in a raw format by the generator means. The portable secure device comprises a routing means capable of forwarding the second data to the peripheral device.

In on embodiment, a user may be intended to log in the host machine and to have an account in the server. The peripheral device may have a first identifier and the portable secure device may have a second identifier. The server may comprise a registering means able to register a link between the user and the peripheral device by associating the account with either the first identifier or with the second identifier.

In on embodiment, the server may comprise both a first secret data and a first security means which is able to send the second data in a secure mode. The portable secure device may comprise both a second secret data and a second security means that is able to retrieve the second data.

Advantageously, the peripheral device may be a USB device and the first interface may be able to act as a USB host port and as a USB device port.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a portable secure device according to the invention;
- Figure 2 depicts schematically an example of a server according to the invention;
- Figure 3 depicts schematically an example of a system comprising a server and a portable secure device which allow the communication between a host machine and a peripheral device according to the invention; and
- Figure 4 depicts schematically an example of step sequence for the exchange of data between a host machine and a peripheral device according to the invention.

### (Detailed description of the preferred embodiments)

The invention may apply to the communication between any types of host machines and any types of peripheral devices. The invention may apply to host machines which have a cloud operating system. The invention may apply to host machines which have an operating system which is not a cloud operating system.

The invention relies on the fact that a generator means acts as a driver allowing to access a peripheral device. The generator means is managed in a server reachable through a network. The invention relies on the fact that a portable secure device is used for establishing a communication channel between the targeted peripheral device and the server.

The portable secure device is a small hardware device which has at least two communication interfaces. For example, such a device may be a dongle.

An advantage of the invention is to provide a solution which does not require that a personal computer (PC) is permanently turn on and connected to the peripheral device. Firstly the presence of a PC connected to the peripheral device is not necessary, and in addition the electric consumption is saved.

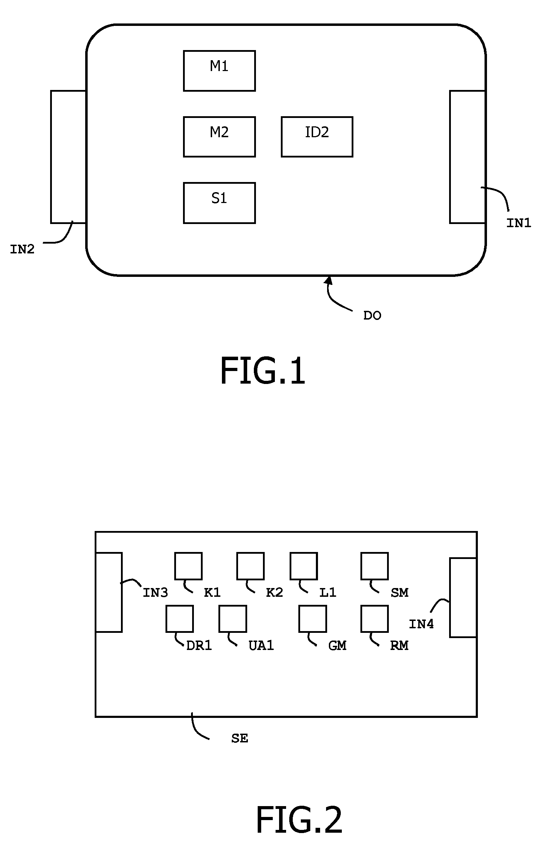

**Figure 1** shows a schematic view of the functional structure of a portable secure device DO according to the invention.

In the example of Figure 1, the portable secure device DO is a dongle. The device DO comprises a communication interface IN1 which is capable of communicating with the targeted peripheral device. In a preferred embodiment, the communication interface IN1 is a USB connector and the device DO comprises a USB controller for managing the communications and/or the power management on the USB connector. The USB connector IN1 may be a USB host port.

Advantageously, the communication interface IN1 may provide both USB host port and USB device port features. The communication interface IN1 may be able to automatically select the configuration (i.e. USB host or USB device port) according to the type of interface of the connected peripheral device. The communication interface IN1 may be linked to a USB controller (embedded in the device DO) able to manage the switch from a configuration to another one. This switch mechanism is known as "USB on the go".

In another embodiment, the communication interface IN1 may be a wireless interface able to communicate with the targeted peripheral device through Bluetooth ®, Wi-fi ®, ZigBee ® or any relevant wireless standard. Alternatively, the communication interface IN1 may be a contact interface compliant with any relevant standard or proprietary specifications.

The device DO comprises a second communication interface IN2 which is capable of communicating with a server SE according to the invention. In a preferred embodiment, the communication interface IN2 is an Ethernet connector. In another embodiment, the communication interface IN2 may be a contact or wireless interface able to communicate with an intermediate router or gateway device. For example the communication interface IN2 may be compliant with USB or Wi-fi ® protocols.

The device DO comprises a routing means M1 capable of forwarding incoming data received from the communication interface IN2 to the communication interface IN1 and vice versa.

In a preferred embodiment, the device DO comprises a secret data S1 and a security means M2 which is capable of protecting exchanged data from spying and fraudulent modifications. The security means M2 may use the secret data S1 for adding integrity data and ciphering the data to be sent to the server SE. The security means M2 may use the secret data S1 for deciphering the data received from the server SE and checking integrity data. Integrity data may be computed thanks to a hash algorithm for example.

In one embodiment, the device DO comprises its own identifier ID2. The identifier ID2 may be a serial number or any relevant data that could uniquely identify the device DO.

**Figure 2** shows a schematic view of the functional structure of a server SE according to the invention.

The server SE is intended to work with the portable secure device DO of Figure 1 for providing a communication path between a targeted peripheral device PD1 and a host machine connected to a network PN.

The server SE comprises a communication interface IN3 connected to a network PN. The communication interface IN3 is able to receive and send data through the network PN. In one embodiment, the network PN is a public network. The network PN may be Internet for example. In a preferred embodiment, the communication interface IN3 is be able to communicate through HTTP (HyperText Transfer Protocol) and HTTPS (HTTP with the Secure Sockets Layer).

The server SE comprises a communication interface IN4 which is able o communicate with a portable secure device as described at Figure 1. In a preferred embodiment, the communication interface IN4 is able to communicate through TCP (Transmission Control protocol) via a network. Both communication interfaces IN3 and IN4 may be connected to either the same network or distinct networks.

The server SE comprises a generator means DR1 which corresponds to the peripheral device PD1. The generator means DR1 is capable of generating a data DA2 from a data DA1 received from a host machine. The generator means DR1 is able to format a command received from the host machine in order to provide a corresponding command which complies with the API (Application Programming Interface) specific to the peripheral device PD1. The generator means DR1 generates data in a raw format which may be understood by the peripheral device PD1. The generator means DR1 is based on a driver corresponding to the peripheral device PD1.

When a data DA3 is sent by the peripheral device PD1 to the server SE (via the portable secure device DO), the generator means DR1 is capable of generating data DA4 from the data DA3. The server SE is able to send the generated data DA4 to the relevant host machine.

The server SE comprises a web service. The host machine uses this web service for accessing the server SE via the communication interface IN3.

Advantageously, the server SE comprises a selecting means GM which is able to select the relevant generator means which corresponds to the targeted peripheral device. The selecting means GM may be implemented through a piece of software able to analyse the incoming data and to provide the relevant generator means with the data to be treated. Alternatively, the selecting means GM may be implemented through an URL dedicated to a peripheral device. Thus a plurality of URLs may allow reaching as many peripheral devices.

In a preferred embodiment, the server SE comprises a secret value K1 and a security means SM which is capable of protecting data that is exchanged with the device DO. The security means SM may use the secret value K1 for adding integrity data and ciphering the data to be sent to the portable secure device DO. The security means SM is also able to decipher the data received from the portable secure device DO and to check the data integrity. Both security means SM and M2 are designed to work together.

In a preferred embodiment, the server SE comprises a user account UA1 which is associated to a user of a host machine. The server SE comprises a registering means RM which is capable of recording a link L1 between the user account UA1 and the peripheral device PD1. The link L1 may be based on an identifier ID1 of the peripheral device PD1. Thanks to the link L1, the server SE is able to select the relevant recipient when sending a data.

Alternatively, the link L1 may be based on an identifier ID2 of the device DO, assuming that an implicit link exists between the peripheral device PD1 and the device DO connected to this device PD1.

In one embodiment, the security means SM is capable of protecting data that is exchanged with a host machine HM. The security means SM may use a secret value K2 for adding integrity data and ciphering the data to be sent to the host machine HM. The security means SM may be also able to decipher the data received from the host machine HM and to check the data integrity. This security feature may use the HTTPS (HTTP with SSL) mechanism which is widely deployed on host machine connected to Internet. In this case the host machine HM is assumed to comprise a relevant secret data S2. This secret data S2 may be installed in the host machine HM when the user account UA1 is created in the server SE.

In one embodiment, the server SE and the device DO may be adapted to communicate by using a proprietary protocol.

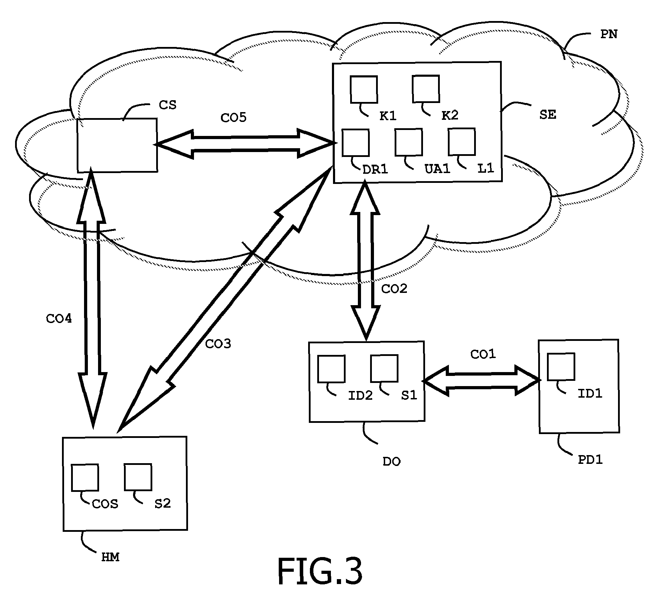

**Figure 3** illustrates an example of the cooperation between the server SE and the portable secure device DO for allowing the communication between a host machine HM and a peripheral device PD1.

The host machine HM comprises a cloud operating system COS and is able to exchange data through a public network PN. A user is assumed to have log in the host machine HM. The user wants to access the peripheral device PD1 which may be a printer, a digital picture frame, a camera or any devices intended to be used as peripheral.

The portable secure device DO is connected to the peripheral device PD1. The connection may either in wire or wireless mode, depending on the device communication interface.

In a preferred mode, the device DO has its own power supply either through a battery or feeder.

When connected in wire mode (i.e. by contact), the peripheral device PD1 may provide the device DO with power.

The server SE is a computer machine reachable through the public network PN which may be Internet.

Advantageously, the server SE comprises the generator means DR1 which allows communicating with the peripheral device PD1. Alternatively, the server SE may be able to get the generator means DR1 from another machine or from a remote database. Before requesting the generator means DR1, the server SE may get either the identifier or the device class of the peripheral device PD1. This identifier or class may be retrieved by sending a query to the peripheral device PD1. When the peripheral device PD1 is an USB device, the process of retrieving the class of the peripheral device PD1 is well known.

If the peripheral device PD1 is not an USB device, the device DO may comprise a specific means able to detect the type of connected peripheral device PD1 and able to send this type to the server SE.

Advantageously, the server SE comprises a user account IA1 associated to the user logged in the host machine HM. The server SE may comprise a registering means RM which is capable of recording a link L1 between the user and the peripheral device PD1. The link L1 may be registered by associating the user account IA1 and an identifier either of the peripheral device PD1 or of the device DO.

The server SE may have a registering API dedicated to the step of peripheral device registration.

When the user wants to send a data DA1 to from the host machine HM to the peripheral device PD1, the first step is to identify the data DA1 in the host machine HM.

Then a communication channel CO3 is established between the host machine and the server SE. The server SE comprises a web service. The host machine initiates the communication channel CO3 by sending a message to a web service contained in the server SE.

Advantageously, the communication channel CO3 is a secured channel.

Then the data DA1 is sent to the server SE. The data DA1 may be sent with additional data which allow to identify the targeted peripheral device PD1.

Then the server SE generates a data DA2 from the data DA1 and by using the generator means DR1 corresponding to the targeted peripheral device PD1. In a preferred embodiment, the peripheral device PD1 has a USB interface and both the peripheral device PD1 and the device DO exchange data through USB mode. The data DA2 is generated in a raw format

Then a communication channel CO2 is established between the server SE and the device DO through the network PN. The server SE sends the data DA2 to the device DO thanks to the communication channel CO2.

Then a communication channel CO1 is established between the device DO and the peripheral device PD1. The device DO forwards the data DA2 to the peripheral device PD1. Thus the peripheral device PD1 may treat the received data DA2 which correspond to the initial data DA1.

Assuming the peripheral device PD1 is a printer, the user can print a document on the peripheral device PD1.

Advantageously, the communication channels CO2 and CO3 may be secured thanks to components embedded in the server SE, the device DO and the host machine HM.

In another embodiment, the host machine HM does not establish the communication channels CO3. The host machine HM may establish a communication channel C04 with a cloud service CS. This communication channel C04 is established through the network PN which is a public network in this case. The cloud service may a cloud printing service for example. Then a communication channel CO5 may be established between the cloud service CS and the server SE. This communication channel CO5 is established through the public network PN. In this embodiment the data DA1 is sent from the host machine HM to the server SE via the cloud service CS. The server SE may have a Web API dedicated to cloud services that aims at accessing a peripheral device.

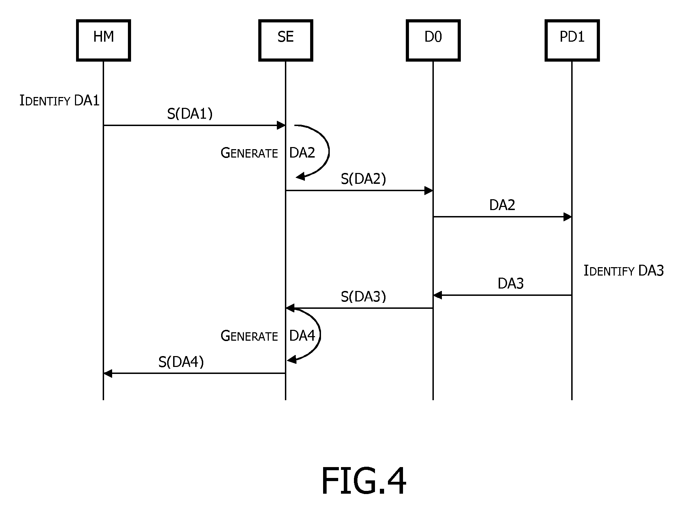

**Figure 4** illustrates an example of step sequence for the exchange of data between a host machine HM and a peripheral device PD1 according to the invention.

A user is assumed to be logged in the host machine HM. This user wants to access the peripheral device PD1. For example the peripheral device PD1 may be a digital camera and the user wants to read pictures stored in a memory card inserted in the digital camera.

The first step is carried out on host machine side. The list of pictures reachable in the camera is assumed to be available in the host machine HM. The user selects the picture he wants to display. This selection step provides a first command DA1 which is intended to be sent to the camera PD1. The command DA1 may be protected through a secure mechanism noted S(DA1) at Figure 4. According to the invention, the command DA1 (or S(DA1)) is sent to the server SE through a public/private network.

Then the server SE analyzes the received data DA1 after a deciphering operation if needed. The analysis is performed thanks to the generator means DR1 which corresponds to the targeted camera PD1. The server SE generates a new data DA2 in a raw format. The data DA2 may be protected through a secure mechanism noted S(DA2). The data DA2 corresponds to a command aiming at accessing a selected picture.

Then a communication channel is established between the server SE and the device DO through a public (or private) network. The server SE sends the data DA2 (or S(DA2)) to the device DO.

Then the device DO forwards the data DA2 to the peripheral device PD1 after a deciphering operation if required.

Further to this receipt, the camera identifies the targeted picture DA3. Then the camera retrieves the picture DA3 and sends it to the device DO. The data DA3 is in a raw format.

Then the device DO forwards the data DA3 to the server SE after a ciphering operation if security is needed. Thus the server SE receives the data DA3 or S(DA3).

The server retrieves the picture DA3 and generates a new data DA4 by using the generator means DR1. The data DA4 may be protected through a secure mechanism noted S(DA4) if required. The data DA4 corresponds to the picture targeted by the initial command DA1. Then the server sends the data DA4 or S(DA4) to the host machine HM. If the sent data have been ciphered, host machine deciphers the received data in order to retrieve the picture DA4. The selected picture DA4 may now be displayed on a screen of the host machine or saved in host machine hard drive.

Advantageously, additional treatments may be provided at the server SE side. These additional treatments may allow updating the data that have been received and that must be forwarded by the server SE. Going back to the preceding example, the picture received by the server may be modified in order to reduce its dimensions (size). Thus the size of the picture sent from the server to the host machine may be reduced, the bandwidth may be saved.

Obviously, if a security check fails at any step, the sequence is stopped before the normal end.

In a preferred embodiment, the server SE may comprise a cache mechanism which stores data coming from the peripheral device. The cache mechanism may be useful when a several access requests of the same type target a unique peripheral device. The cache mechanism may be useful when several users (i.e. several host machines) access the same peripheral device. The cache mechanism may be useful when a user generates several access requests targeting the same peripheral device during a short duration.

Advantageously, the cache mechanism may assign a maximum memory size (i.e. a quota) to each user.

Advantageously, the server SE may comprise a buffer mechanism which stores the requests targeting a peripheral device. The buffer mechanism may be useful when several access requests targeting the same peripheral device simultaneously occur.

## Claims

1. **Method** for managing a communication between a host machine (HM) and a peripheral device (PD1),
**characterized in that** the method comprises the steps:
- identifying a first data (DA1) in the host machine (HM),
- sending said first data (DA1) to a server (SE) through a network (PN), said server comprising a generator means (DR1) corresponding to the peripheral device (PD1),
- generating a second data (DA2) by using said first data (DA1) and said generator means (DR1),
- sending said second data (DA2) to a portable secure device (DO) through said network (PN), said portable secure device (DO) being connected to the peripheral device (PD1),
- sending said second data (DA2) in a raw format from the portable secure device (DO) to the peripheral device (PD1).

2. Method according to claim 1, wherein said host machine (HM) runs a cloud operating system (COS).

3. Method according to any one of the preceding claims, wherein a user logs in the host machine (HM), wherein said user has an account (UA1) in the server (SE), wherein the peripheral device (PD1) has a first identifier (ID1), wherein the portable secure device (DO) has a second identifier (ID2) and wherein the method comprises the step:
- registering a link (L1) between the user and the peripheral device (PD1), in the server (SE), by associating said account (UA1) with said first identifier (ID1) or with said second identifier (ID2).

4. Method according to any one of the preceding claims, wherein the second data (DA2) is sent from the server (SE) to the portable secure device (DO) in a secure mode.

5. Method according to any one of the claims 1 to 4, wherein the method comprises the step:
- establishing a secure session between the host machine (HM) and the server (SE).

6. Method according to any one of the claims 1 to 4, wherein the peripheral device (PD1) belongs to a device class, and wherein the first data (DA1) is sent from the host machine (HM) to the server (SE) through a cloud service (CS) which is dedicated to said class.

7. Method according to any one of the claims 1 to 6, wherein the peripheral device (PD1) is a USB device and wherein the portable secure device (DO) comprises a port (IN1) of USB host type.

8. Method according to any one of the claims 1 to 6, wherein the peripheral device (PD1) has a wireless interface and wherein the portable secure device (DO) comprises a wireless port (IN1).

9. Method according to any one of the preceding claims, wherein the method comprises the further steps:
- identifying a third data (DA3) in the peripheral device (PD1),
- sending said third data (DA3) in a raw format to the portable secure device (DO),
- sending the third data (DA3) to the server (SE),
- generating a fourth data (DA4) by using said third data (DA3) and said generator means (DR1),
- sending the fourth data (DA4) from the server (SE) to the host machine (HM).

10. Method according to any one of the preceding claims, wherein said network (PN) is a public network or a private network.

11. A **system** comprising a portable secure device (DO) and a server (SE), said system allowing a communication between a peripheral device (PD1) and a host machine (HM), said portable secure device (DO) comprising a first interface (IN1) able to communicate with the peripheral device (PD1), said portable secure device (DO) comprising a second communication interface (IN2) able to communicate with the server (SE), said server (SE) being able to receive a first data (DA1) from the host machine (HM) through a network (PN),
**characterized in that** said server (SE) comprises a generator means (DR1) corresponding to the peripheral device (PD1), **in that** said server (SE) comprises a generator means (DR1) able to generate a second data (DA2) by using said first data (DA1), said second data (DA2) being generated in a raw format, and **in that** said portable secure device (DO) comprises a routing means (M1) able to forward the second data (DA2) to the peripheral device (PD1).

12. A system according to claim 11, wherein a user is intended to log in the host machine (HM), wherein said user has an account (UA1) in the server (SE), wherein the peripheral device (PD1) has a first identifier (ID1), wherein the portable secure device (DO) has a second identifier (ID2) and wherein said server (SE) comprises a registering means (RM) able to register a link (L1) between the user and the peripheral device (PD1) by associating said account (UA1) with said first identifier (ID1) or with said second identifier (ID2).

13. A system according to any one of the claims 11 to 12, wherein the server (SE) comprises a first secret data (K1) and a first security means (SM) able to send the second data (DA2) in a secure mode, and wherein the portable secure device (DO) comprises a second secret data (S1) and a second security means (M2) able to retrieve the second data (DA2).

14. A system according to any one of the claims 11 to 13, wherein the peripheral device (PD1) is a USB device and wherein the first interface (IN1) is able to act as a USB host port and as a USB device port.
